# EUROPÄISCHE PATENTSCHRIFT

(11) **EP 2 216 557 B1**
(45) Veröffentlichungstag und Bekanntmachung des Hinweises auf die Patenterteilung: **08.07.2015**
(21) Anmeldenummer: 10001215.2
(22) Anmeldetag: 05.02.2010
(51) Int. Cl.: F16C 9/00, F16C 33/24

(54) **Gleitlagerschale**
Sliding bearing shell
Coussinet de palier lisse

(30) Priorität: 06.02.2009 DE 102009007847
(43) Veröffentlichungstag der Anmeldung: 11.08.2010
(73) Patentinhaber: KS Gleitlager GmbH, 68789 St. Leon-Rot (DE)
(72) Erfinder: Langner, Heinbert, 33378 Rheda-Wiedenbrück (DE)
(74) Vertreter: DREISS Patentanwälte PartG mbB

(56) Entgegenhaltungen:
- DE-A1- 2 711 983
- DE-A1- 3 621 577
- DE-A1- 3 905 450
- FR-A- 1 099 629

## Beschreibung

Die Erfindung betrifft eine Lagerstelle mit einer Gleitlagerschale, insbesondere Pleuellagerschale oder Hauptlagerschale, und einer Welle, wobei die Gleitlagerschale eine metallische Trägerschicht, insbesondere aus Stahl, und eine metallische Gleitschicht aus einer Gleitlagerlegierung, welche bei der Ausbildung einer Lagerstelle mit der rotierend antreibbaren Welle gleitend zusammenwirkt.

Die Erfindung betrifft also eine Lagerstelle mit einer Gleitlagerschale aus einem metallischen Gleitlagerverbundwerkstoff, nicht aus einem Metall/Kunststoff-Gleitlagerverbundwerkstoff.

Zur Verringerung des Verschleißes durch Schmutz oder Abrieb der Gleitpartner wurde bereits der Vorschlag unterbreitet, über die gesamte Gleitfläche Vertiefungen vorzusehen, die mit Festschmierstoff befüllt sind und zur Einbettung von Partikeln dienen (siehe z.B. DE 80 20 524 U1). Die Gesamtfläche der Ausnehmungen soll dabei ein Drittel der Gleitfläche betragen; sie kann aber auch höher liegen. Mit DE 36 21 577 A1, die als gattungsgemäß anzusehen ist, wurde vorgeschlagen, in einem den Hauptlastbereich der Lagerstelle umfassenden Bereich der Lagerschale nutartige Vertiefungen vorzusehen, die mit einem Werkstoff geringerer Härte befüllt sind, um die Einbettfähigkeit von Fremdkörpern zu verbessern.

Der vorliegenden Erfindung liegt die Aufgabe zugrunde, dem Problem des Verschleißes zu begegnen, wobei aber gleichwohl eine hohe Tragfähigkeit der Lagerschale erzielt oder beibehalten werden soll.

Diese Aufgabe wird durch eine Lagerstelle mit den Merkmalen des Anspruchs 1 gelöst.

Im Betrieb einer Gleitlagerschale der hier in Rede stehenden Art, wobei typischerweise eine Lagerstelle aus zwei mit ihren Trennflächen gegeneinander anliegenden Gleitlagerschalen gebildet ist, gleitet die rotierend antreibbare Welle mit ihrer geometrischen Längsmittelachse nicht exakt fluchtend zur geometrischen Längsmittelachse der Lagerschale, sondern verläuft etwas radial hierzu. Es bildet sich ein keilförmiger Schmierspalt, der sich keilförmig spitz auslaufend in Umdrehungsrichtung der Welle verjüngt und nach Erreichen eines minimalen Spaltmaßes wieder aufweitet.

Mit der vorliegenden Erfindung wurde festgestellt, dass es bevorzugt in dem sich verjüngenden Schmierspalt zu Beschädigungen der Gleitlageranordnung kommen kann, wenn Schmutz oder Abrieb der Gleitpartner auftreten oder Bearbeitungsrückstände aus der Motorenfertigung, insbesondere zu Beginn des Motorbetriebs, in den Schmierspalt gelangen.

Gemäß der Erfindung wurde weiter erkannt, dass eine erhebliche Verbesserung des geschilderten Problems erreicht werden kann, wenn nur in diesem kritischen Bereich eine Tasche vorgesehen wird und somit nur in diesem kritischen Bereich eine Möglichkeit für die Aufnahme und Einbettung von Partikelschmutz oder Abrieb vorgesehen wird. Dadurch, dass außerhalb dieses kritischen Bereichs des Schmierspalts im wesentlichen die gesamte Fläche der Gleitschicht zur Verfügung steht, wird eine höhere Tragfähigkeit der Lagerschale realisiert als dies der Fall wäre, wenn über die gesamte Fläche der Lagerschale bzw. der Gleitschicht derartige Taschen vorgesehen wären.

Erfindungsgemäß ist die wenigstens eine Tasche mit einem für die Einbettung von Partikelschmutz oder Abrieb geeigneten duktilen Werkstoff befüllt. Der Begriff Tasche erfasst in diesem Fall eine an sich beliebige Ausnehmung oder Vertiefung zumindest in der metallischen Gleitschicht, die sich aber auch bis in die metallische Trägerschicht erstrecken kann.

Es erweist sich weiter als vorteilhaft, wenn die wenigstens eine Tasche in Umfangsrichtung der Gleitlagerschale ein Umfangssegment von 5 bis 12°, insbesondere 8 bis 12° erfasst.

Im Hinblick auf einen wirksamen erfindungsgemäß verbesserten Schutz der Gleitlagerschale gegen Verschleiß und Reibschweißerscheinungen erweist es sich als vorteilhaft, wenn die wenigstens eine Tasche in axialer Richtung der Gleitlagerschale über wenigstens 60 %, insbesondere über wenigstens 70 %, insbesondere über wenigstens 80 % und weiter insbesondere über wenigstens 90 % der Breite der Gleitlagerschale erstreckt ist.

Weiter erweist es sich als vorteilhaft, wenn die wenigstens eine Tasche eine Erstreckung in Umfangsrichtung von 1 bis 5 mm, insbesondere von 2 bis 4 mm und weiter insbesondere von 2 bis 3 mm aufweist.

Es wird ferner erfindungsgemäß vorgeschlagen, dass die wenigstens eine Tasche eine Tiefe von 30 - 150 µm, insbesondere von 30 - 100 µm, insbesondere von 40 - 80 µm aufweist.

Es wäre beispielsweise denkbar, dass die wenigstens eine Tasche wie vorausgehend schon angedeutet sich über einen wesentlichen Abschnitt, insbesondere über im Wesentlichen die gesamte Breite der Gleitlagerschale, erstreckt, so dass auf diese Weise die Gleitlagerschale über ihre Breite durch die erfindungsgemäße Maßnahme geschützt ist. In Weiterbildung der Erfindung erweist es sich aber auch als vorteilhaft, wenn im Bereich des Schmierkeils mehrere mit weicherem Werkstoff gefüllte Taschen vorgesehen sind. Auf diese Weise kann der weichere Werkstoff besser in einer jeweiligen kleineren Tasche gehalten werden. Außerdem steht der Bereich zwischen den Taschen als tragender Bereich der Gleitlagerschale für den Gleitpartner, also die rotierende Welle, zur Verfügung.

In Weiterbildung dieses Erfindungsgedankens erweist es sich als vorteilhaft, wenn im Bereich des Schmierkeils mehrere mit weicherem Werkstoff gefüllte Taschen vorgesehen sind, die in axialer Richtung, insbesondere mit etwas Abstand voneinander, aufeinanderfolgen oder versetzt zueinander angeordnet sind.

In noch weitergehender Ausbildung der Erfindung erweist es sich als vorteilhaft, wenn im Bereich des Schmierkeils mehrere mit weicherem Werkstoff gefüllte Taschen vorgesehen sind, die derart angeordnet sind, dass in Umfangsrichtung gesehen eine Überdeckung von benachbarten Taschen gegeben ist.

Der gegenüber der Gleitlagerlegierung weichere Werkstoff kann in vorteilhafter Weise und nach einer Ausführungsform der Erfindung von einem weicheren Metall oder einer Metalllegierung, insbesondere Zinn, Zinnlegierung oder gebildet sein. Nach einer anderen Ausführungsform der Erfindung kann die wenigstens eine Tasche mit einem temperaturbeständigen Kunststoff befüllt sein, der hinsichtlich seiner Duktilität zur Aufnahme von Partikelschmutz oder Abrieb geeignet ist.

Desweiteren betrifft die Erfindung eine Verwendung einer Gleitlagerschale nach Anspruch 11.

Es wurde ferner erfindungsgemäß festgestellt, dass optimale Ergebnisse erreicht werden, wenn das Umfangssegment, in dem die wenigstens eine Tasche oder mehrere Taschen vorgesehen sind, der Stelle geringsten Spaltmaßes des Schmierspalts (geringster Abstand zwischen Welle und Gleitschicht) vorgeordnet ist, weil dadurch die mit weicherem Werkstoff befüllten Taschen vor mitunter turbulenten Einflüssen des Schmiermittels am Minimum des Schmierspalts geschützt werden. Dennoch zeigt sich, dass Partikelschmutz oder Abrieb eingelagert werden und somit nicht abrasiv im Bereich des Minimums des Schmierspalts wirken können.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: eine schematische Darstellung einer Lagerstelle in axialer Richtung betrachtet;
- Figur 2: eine perspektivische Ansicht einer ersten Ausführungsform einer erfindungsgemäßen Gleitlagerschale;
- Figur 3: eine perspektivische Ansicht einer zweiten Ausführungsform einer erfindungsgemäßen Gleitlagerschale und
- Figur 4: eine Lagerstelle im großen Pleuelauge eines Pleuels.

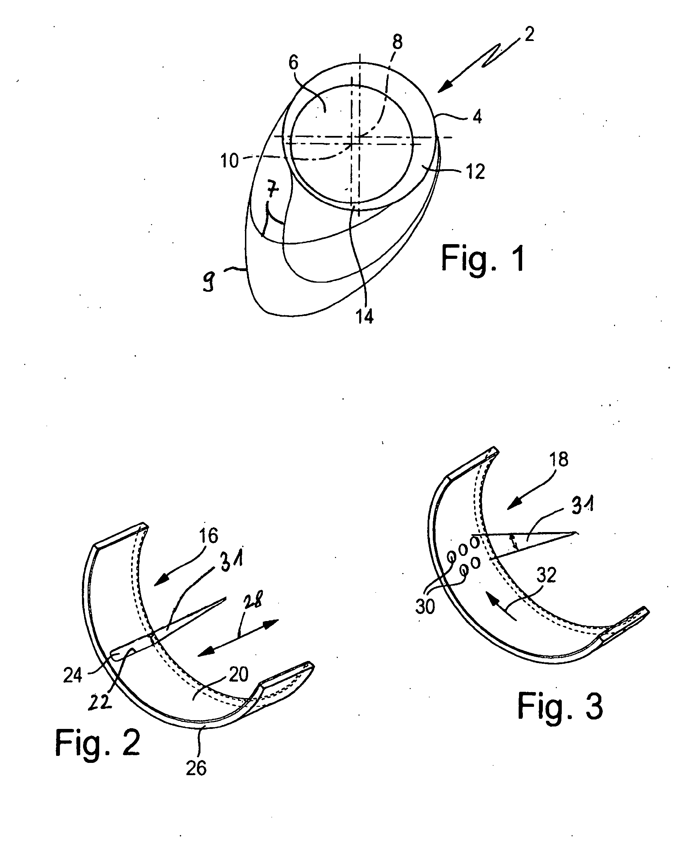

Figur 1 zeigt schematisch eine insgesamt mit dem Bezugszeichen 2 bezeichnete Lagerstelle, von der lediglich ein zylindrisches Gleitlagerelement 4, das aus zwei mit ihren Trennflächen gegeneinander anliegenden Gleitlagerschalen gebildet sein kann, und eine rotierend antreibbare Welle 6 dargestellt ist. Ferner sind Belastungskurven infolge des Öldrucks angedeutet, und zwar zwei Komponenten 7 des Öldrucks und deren Summe 9. Gemäß der nicht maßstabsgetreuen Darstellung erkennt man, dass die geometrische Längsmittelachse 8 des Gleitlagerelements 4 und die Längsmittelachse 10 der Welle 6 nicht miteinander fluchten, sondern in radialer Richtung etwas voneinander beabstandet sind. Diese Situation ist aus den Abmessungen und Toleranzen des Gleitlagerelements und der Welle und der Umdrehungsrichtung der Welle und aus den auftretenden Belastungen in der Lagerstelle 2 vorhersehbar. Es ist also möglich, den Versatz der Längsmittelachsen zueinander und in der Folge die Anordnung eines Schmierspalts 12 zwischen Gleitlagerelement 4 und Welle 6 in Umfangsrichtung genau vorherzusehen und auszulegen. Man erkennt in Figur 1, dass der Schmierspalt 12 einen spitz auslaufenden Schmierkeil 14 bildet oder aufweist, der im dargestellten Fall ungefähr auf der 7:30 Uhr-Position sein geringstes Spaltmaß erreicht, also den geringsten Abstand zwischen Welle und Gleitschicht, und sich danach wieder aufweitet. Im Bereich dieses spitz auslaufenden Schmierkeils 14, und zwar im Bereich des geringsten Spaltmaßes, kommt es häufig zu Problemen im Hinblick auf Verschleiß, Reibschweißerscheinungen und Abrieb, welche die Gleitpartner, also sowohl die Welle 6 als auch zumeist die demgegenüber weichere metallische Gleitlagerlegierung des Gleitlagerelements 4, beschädigen. Dem wird mit der vorliegenden Erfindung entgegengetreten.

Figuren 2 und 3 zeigen zwei Ausführungsformen einer erfindungsgemäß ausgebildeten Gleitlagerschale 16 bzw. 18. Bei der Gleitlagerschale 16 ist eine von der Innenseite einer metallischen Gleitschicht 20 aus Gleitlagerlegierung ausgehende Tasche 22 ausgebildet, die mit einem gegenüber der Gleitlagerlegierung weicheren Werkstoff 24 befüllt ist. Die Tiefe der Tasche beträgt vorteilhafterweise 30 bis 150 µm; sie kann sich durch die gesamte Dicke der Gleitschicht 20 bis in eine metallische Trägerschicht 26, insbesondere aus Stahl, erstrecken; oder sie kann lediglich innerhalb der Gleitschicht 20 ausgebildet sein.

Man erkennt in Figur 2, dass die Tasche 22 in axialer Richtung oder Breitenrichtung 28 der Gleitlagerschale 16 über gut ¾, also im Wesentlichen über die gesamte Breite der Gleitlagerschale 16, erstreckt ist. Auf diese Weise wird die Gleitlagerschale 16 über im Wesentlichen ihre gesamte Breite auf die erfindungsgemäße Weise verbessert und geschützt.

Bei der in Figur 3 dargestellten Ausführungsform der Erfindung sind mehrere Taschen 30 vorgesehen, wobei einige Taschen 30 in axialer Richtung oder Breitenrichtung 28 der Gleitlagerschale 16 aufeinander folgend, jedoch in zwei Reihen und damit versetzt zueinander vorgesehen sind (einmal drei und einmal zwei Taschen). Auf diese Weise ergibt sich in Umfangsrichtung 32 betrachtet gleichwohl eine Überdeckung der benachbarten Taschen 30, so dass auch bei dieser Ausführungsform die Gleitlagerschale 18 über gut ¾ ihrer Breite auf die erfindungsgemäße Weise verbessert ist.

Wenn im Betrieb der erfindungsgemäßen Gleitlagerschalen 16, 18 Partikelschmutz oder Abrieb infolge der Umdrehung der Welle 6 in Richtung des sich keilförmig verjüngenden und spitz auslaufenden Schmierkeils zwischen den Gleitpartnern verdrängt wird, so kann dieser Partikelschmutz oder Abrieb in den Taschen 22, 30 aufgenommen werden; er führt somit nicht zu einer Verschleißbeanspruchung der Gleitpartner oder gar zur Zerstörung der Lagerstelle.

Die wenigstens eine Tasche 22, 30 erfasst dabei in Umfangsrichtung der Gleitlagerschale 16, 18 ein Umfangssegment 31 von 5 bis 15°. Bei einer Ausführungsform mit mehreren Taschen, wie in Figur 3 dargestellt, erstreckt sich der Bereich, in dem die Taschen 30 vorgesehen sind, über ein Umlaufsegment 31 von 5 bis 15° in Umfangsrichtung.

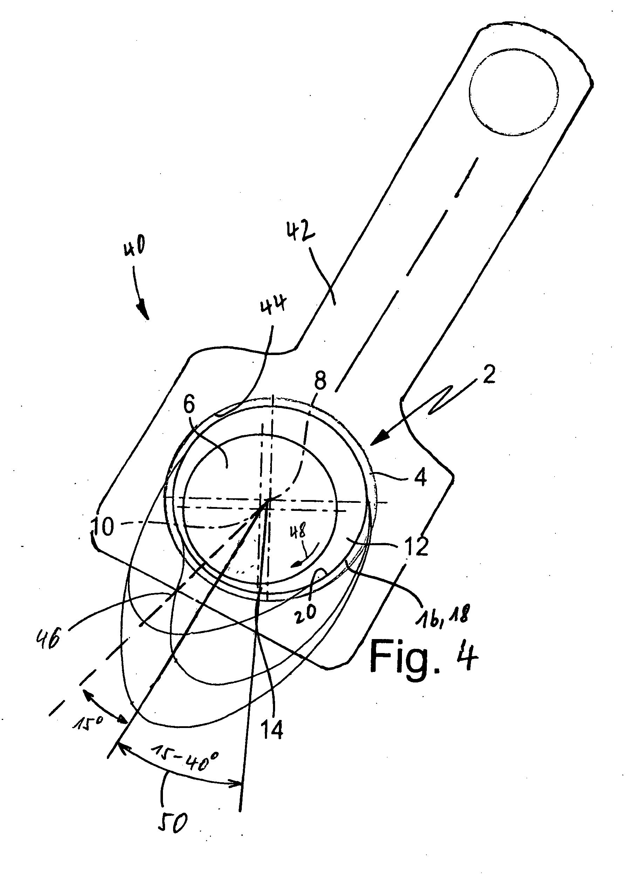

Schließlich zeigt Figur 4 eine insgesamt mit dem Bezugszeichen 40 bezeichnete Lagerstelle in einem Pleuel 42 eines nicht dargestellten Verbrennungsmotors. Im großen Pleuelauge 44 des Pleuels 42 sind zwei mit ihren Trennseite auf Stoß gegeneinander anliegende Lagerschalen 16, 18 angeordnet, die den Lagerschalen 16, 18 der Figuren 2 und 3 entsprechen können. Die Welle 6 ist von einem Kurbelwellenzapfen einer ansonsten nicht dargestellten Kurbelwelle gebildet. Die Darstellung der Lagerstelle ist wie bei Figur 1 nicht maßstabsgetreu. Man erkennt einen übertrieben dargestellten Schmierspalt 12, der in einen spitz auslaufenden Schmierkeil 14 übergeht. Die Stelle minimalen Abstands zwischen einer Gleitschicht 20 der Gleitlagerschale 16, 18 und der Welle 6 ist durch eine unterbrochene Linie 46 bezeichnet. Die in Figur 4 nicht im Einzelnen dargestellte(n) Tasche(n) der Gleitlagerschale 16, 18 ist/sind in Umdrehungsrichtung 48 der Welle 6 dieser Stelle 46 geringsten Abstands vorgeordnet. Sie ist/sind in einem Umfangssegment 50 angeordnet, welches etwa den Bereich 15° bis 40° vor der Stelle 46 geringsten Abstands, also dem Minimum des Schmierspalts 12 oder Schmierkeils 14 überfängt. Es hat sich gezeigt, dass in diesem Bereich eine effektive Aufnahme von Partikelabrieb möglich ist und dass die dort vorgesehene(n) Tasche(n) 22, 30 durch ihren Abstand von wenigstens 15° von dem Minimum des Schmierkeils 14 gegen abrasive Auswaschung geschützt ist. Ein weiterer Vorteil ist, dass im Bereich des Minimums des Schmierspalts 12 die Gleitfläche 20 der Gleitlagerschale 16, 18 mit ihrer gesamten Fläche trägt.

## Patentansprüche

1. Lagerstelle (2, 40) aus Lagerschalen (16, 18), insbesondere Pleuellagerschalen oder Hauptlagerschalen, und einer Welle (6), insbesondere Kurbelwellenzapfen oder Kurbelwelle, wobei die Lagerschalen je eine metallische Trägerschicht (26), insbesondere aus Stahl, und eine metallische Gleitschicht (20) aus einer Gleitlagerlegierung aufweisen, und bei der Ausbildung der Lagerstelle (2) mit der rotierend antreibbaren Welle (6) gleitend zusammenwirken, wobei im Betrieb sich keilförmig spitz auslaufender Schmierspalt bzw. Schmierkeil bildet, **dadurch gekennzeichnet, dass** die Gleitschicht (20) einer der Lagerschalen nur in einem Bereich des spitz auslaufenden Schmierkeils (14) zwischen Welle (6) und Gleitschicht (20) wenigstens eine Tasche (22, 30) aufweist, die mit einem gegenüber der Gleitlagerlegierung weicheren Werkstoff (24) gefüllt ist und zur Einbettung von Partikelschmutz oder Abrieb dient, um die Lagerstelle (2) vor Verschleiß und Reibschweißen zu schützen, wobei die wenigstens eine Tasche (22, 30) in Umfangsrichtung (32) der Gleitlagerschale ein Umfangssegment (31) von 5 - 15° erfasst, wobei der Bereich des spitz auslaufenden Schmierkeils (14) zwischen Welle (6) und Gleitschicht (20) der Lagerschale, in dem die wenigstens eine Tasche (30) vorgesehen ist, in Umdrehungsrichtung der Welle innerhalb eines Umfangssegments (50) von 15 - 40°, insbesondere von 20 - 40°, vor dem geringsten Abstand (46) zwischen Welle (6) und Gleitschicht (20)also vor dem Minimum des Schmierkeils angeordnet ist, das heißt einen Abstand von wenigstens 15° und höchstens 40° von dem Minimum des Schmierkeils aufweist.

2. Lagerstelle nach Anspruch 1, **dadurch gekennzeichnet, dass** die wenigstens eine Tasche (22, 30) in Umfangsrichtung (32) der Gleitlagerschale (16, 18) ein Umfangssegment (31) von 5 - 12°, insbesondere von 8 - 12° erfasst.

3. Lagerstelle nach Anspruch 1 oder 2, **dadurch gekennzeichnet, dass** die wenigstens eine Tasche (22) in axialer Richtung (28) der Gleitlagerschale (16, 18) über wenigstens 60 %, insbesondere über wenigstens 70 %, insbesondere über wenigstens 80 % und weiter insbesondere über wenigstens 90 % der Breite der Gleitlagerschale erstreckt ist.

4. Lagerstelle nach Anspruch 1, 2 oder 3, **dadurch gekennzeichnet, dass** die wenigstens eine Tasche (22, 30) eine Erstreckung in Umfangsrichtung (32) von 1-5 mm, insbesondere von 2 - 4 mm und weiter insbesondere von 2 - 3 mm aufweist.

5. Lagerstelle nach einem oder mehreren der vorstehenden Ansprüche, **dadurch gekennzeichnet, dass** die wenigstens eine Tasche (22, 30) eine Tiefe von 30 - 150 µm, insbesondere von 30 - 100 µm, insbesondere von 40 - 80 µm aufweist.

6. Lagerstelle nach einem oder mehreren der vorstehenden Ansprüche, **dadurch gekennzeichnet, dass** im Bereich des Schmierkeils (14) mehrere mit weicherem Werkstoff gefüllte Taschen (30) vorgesehen sind.

7. Lagerstelle nach Anspruch 6, **dadurch gekennzeichnet, dass** im Bereich des Schmierkeils (14) mehrere mit weicherem Werkstoff gefüllte Taschen (30) vorgesehen sind, die in axialer Richtung (28) aufeinander folgen oder versetzt zueinander angeordnet sind.

8. Lagerstelle nach Anspruch 6 oder 7, **dadurch gekennzeichnet, dass** im Bereich des Schmierkeils (14) mehrere mit weicherem Werkstoff gefüllte Taschen (30) vorgesehen sind, die derart angeordnet sind, dass in Umfangsrichtung (32) gesehen eine Überdeckung von benachbarten Taschen (30) gegeben ist.

9. Lagerstelle nach einem oder mehreren der vorstehenden Ansprüche, **dadurch gekennzeichnet, dass** die wenigstens eine Tasche (22, 30) mit einem weicheren Metall der einer Metalllegierung, insbesondere Zinn, Zinnlegierung oder Zinnbasislegierung, befüllt ist.

10. Lagerstelle nach einem oder mehreren der vorstehenden Ansprüche, **dadurch gekennzeichnet, dass** die wenigstens eine Tasche (22, 30) mit einem temperaturbeständigen Kunststoff befüllt ist.

11. Verwendung einer Gleitlagerschale (16, 18), insbesondere Pleuellagerschale oder Hauptlagerschale, mit einer metallischen Trägerschicht (26), insbesondere aus Stahl, und einer metallischen Gleitschicht (20) aus einer Gleitlagerlegierung, bei einer Lagerstelle mit den Merkmalen eines oder mehrerer der Ansprüchen 1-10, wobei die Gleitschicht (20) nur in einem Bereich des spitz auslaufenden Schmierkeils (14) zwischen Welle (6) und Gleitschicht (20) wenigstens eine Tasche (22, 30) aufweist, die mit einem gegenüber der Gleitlagerlegierung weicheren Werkstoff (24) gefüllt ist und zur Einbettung von Partikelschmutz oder Abrieb dient, um die Lagerstelle (2) vor Verschleiß und Reibschweißen zu schützen, wobei die wenigstens eine Tasche (22, 30) in Umfangsrichtung (32) der Gleitlagerschale ein Umfangssegment (31) von 5 - 15° erfasst.

## Claims

1. Bearing position (2, 40) of bearing shells (16, 18), in particular big end bearing shells or main bearing shells, and a shaft (6), in particular crankshaft journal of crankshaft, whereby the bearing shells each comprise a metallic carrier layer (26), in particular of steel, and a metallic glide layer (20) of a glide bearing alloy, and glide cooperatively with the rotation-driveable shaft (6) when forming the bearing position (2), whereby a wedge-shaped pointedly tapering lubrication gap or lubrication wedge is formed during operation, **characterised in that** the glide layer (20) of one of the bearing shells comprises at least one pocket (22, 30) in an area of the pointedly tapering lubrication wedge (14) between shaft (6) and glide layer (20), filled with a material (24) that is softer than the glide layer alloy, and serves for embedding particle contamination or abrasion, for protecting the bearing position (2) against wear and friction welding, whereby the at least one pocket (22, 30) takes up a circumference segment (31) of 5 - 15° in circumference direction (32) of the glide bearing shell, whereby the area of the pointedly tapering lubrication wedge (14) between shaft (6) and glide layer (20) of the bearing shell, in which the at least one pocket (30) is envisaged, is located within a circumference segment (50) of 15 - 40°, in particular of 20 - 40°, in circumference direction of the shaft before the smallest distance (46) between shaft (6) and glide layer (20), therefore before the minimum of the lubrication wedge, which means it comprises a distance of at least 15° and at most 40° of the minimum of the lubrication wedge.

2. Bearing position according to claim 1, **characterised in that** the at least one pocket (22, 30) takes up a circumference segment (31) of 5 - 12°, in particular of 8 - 12° in circumference direction (32) of the glide bearing shell (16, 18).

3. Bearing position according to claim 1 or 2, **characterised in that** the at least one pocket (22) extends across at least 60%, in particular across at least 70%, in particular across at least 80%, and more particularly across at least 90% of the width of the glide bearing shell in an axial direction (28) of the glide bearing shell (16, 18).

4. Bearing position according to claim 1, 2 or 3, **characterised in that** the at least one pocket (22, 30) comprises an expansion in circumference direction (32) of 1 - 5 mm, in particular of 2 - 4 mm, and more particularly of 2 - 3 mm.

5. Bearing position according to one or more of the preceding claims, **characterised in that** the at least one pocket (22, 30) comprises a depth of 30 - 150 µm, in particular of 30 - 100 µm, in particular of 40 - 80 µm.

6. Bearing position according to one or more of the preceding claims, **characterised in that** several pockets (30) filled with a softer material are envisaged in the area of the lubrication wedge (14).

7. Bearing position according to claim 6, **characterised in that** several pockets (30) filled with a softer material are envisaged in the area of the lubrication wedge (14), which follow each other in an axial direction (28) or are offset from each other.

8. Bearing position according to claim 6 or 7, **characterised in that** several pockets (30) filled with a softer material are envisaged in the area of the lubrication wedge (14), arranged in such a way that an overlapping of adjacent pockets (30) is given, seen in a circumference direction (32).

9. Bearing position according to one or more of the preceding claims, **characterised in that** the at least one pocket (22, 30) is filled with a softer metal or a metal alloy, in particular tin, tin alloy or tin base alloy.

10. Bearing position according to one or more of the preceding claims, **characterised in that** the at least one pocket (22, 30) is filled with a temperature resistant plastic.

11. Use of a glide bearing shell (16, 18), in particular crankshaft journal of crankshaft, with a metallic carrier layer (26), in particular of steel, and a metallic glide layer (20) of a glide bearing alloy, for a bearing position with the characteristics of one or more of the claims 1-10, whereby the glide layer (20) comprises at least one pocket (22, 30) only in the area of the pointedly tapering lubrication wedge (14) between shaft (6) and glide layer (20), filled with a material (24) that is softer than the glide layer alloy, and serves for embedding particle contamination or abrasion, for protecting the bearing position (2) against wear and friction welding, whereby the at least one pocket (22, 30) takes up a circumference segment (31) of 5 - 15° in circumference direction (32) of the glide bearing shell.

## Revendications

1. Point d'appui de palier (2, 40) de coussinets de palier (16, 18), en particulier des coussinets de palier de bielle ou des coussinets de palier principal, et un arbre (6), en particulier une bielle de vilebrequin ou un vilebrequin, chaque coussinet de palier présentant une couche de point d'appui métallique (26), en particulier en acier, et une couche de glissement métallique (20) constituée d'un alliage de palier lisse et, par la formation du point d'appui de palier (2), coopérant de manière coulissante avec un arbre pouvant être entrainé en rotation (6) de sorte qu'en fonctionnement, une rainure de lubrification se terminant en pointe en forme de coin, ou plutôt un coin de lubrification, est formée, **caractérisé en ce que** la couche de glissement (20) d'un des coussinets de palier présente au moins une poche (22, 30) dans la zone du coin de lubrification se terminant en pointe (14) entre l'arbre (6) et la couche de glissement (20), qui est remplie d'un matériau (24) plus mou par rapport à l'alliage du palier lisse, et qui sert pour incorporer les particules de saleté ou d'abrasion afin de protéger le point d'appui de palier (2) contre l'usure et le soudage par friction, de sorte que la au moins une poche (22, 30), dans la direction circonférentielle (32) du coussinet de palier lisse, présente un segment circonférentiel (31) de 5 à 15°, dans lequel la zone du coin de lubrification se terminant en pointe (14) entre l'arbre (6) et la couche de glissement (20) du coussinet de palier, dans laquelle la au moins une poche (30) est prévue, dans la direction de rotation de l'arbre (6), est agencée à l'intérieur d'un segment circonférentiel (50) de 15 à 40°, en particulier de 20 à 40°, en avant de la plus petite étendue (46) entre l'arbre (6) et la couche de glissement (20) et également en avant du minimum du coin de lubrification, c'est-à-dire présente une étendue d'au moins 15° et d'au plus 40° par rapport au minimum du coin de lubrification.

2. Point d'appui de palier selon la revendication 1, **caractérisé en ce que** la au moins une poche (22, 30), dans la direction circonférentielle (32) du coussinet de palier lisse (16, 18), présente un segment circonférentiel (31) de 5 à 12°, en particulier de 8 à 12°.

3. Point d'appui de palier selon la revendication 1 ou 2, **caractérisé en ce que** la au moins une poche (22) s'étend dans la direction axiale (28) du coussinet de palier lisse (16, 18) sur au moins 60 %, en particulier sur au moins 70 %, en particulier sur au moins 80 %, et plus particulièrement sur au moins 90 % de la largeur du coussinet de palier lisse.

4. Point d'appui de palier selon la revendication 1, 2 ou 3, **caractérisé en ce que** la au moins une poche (22, 30) a une étendue dans la direction circonférentielle (32) de 1 à 5 mm, en particulier de 2 à 4 mm, et de manière encore plus particulière de 2 à 3 mm.

5. Point d'appui de palier selon l'une quelconque des revendications précédentes, **caractérisé en ce que** la au moins une poche (22, 30) a une profondeur de 30 à 150 µm, en particulier de 30 à 100 µm, en particulier de 40 à 80 µm.

6. Point d'appui de palier selon l'une quelconque des revendications précédentes, **caractérisé en ce que** plusieurs poches (30) remplies d'un matériau plus mou sont prévues dans la zone du coin de lubrification (14).

7. Point d'appui de palier selon la revendication 6, **caractérisé en ce que** plusieurs poches (30) remplies d'un matériau plus mou sont prévues dans la zone du coin de lubrification (14), qui se suivent les unes les autres dans la direction axiale (28), ou qui sont agencées avec un décalage les unes par rapport aux autres.

8. Point d'appui de palier selon la revendication 6 ou 7, **caractérisé en ce que** plusieurs poches (30) remplies d'un matériau plus mou sont prévues dans la zone du coin de lubrification (14), qui sont agencées de telle sorte qu'en regardant dans la direction circonférentielle (32), il est possible de distinguer un chevauchement de poches (30) voisines.

9. Point d'appui de palier selon l'une quelconque des revendications précédentes, **caractérisé en ce que** la au moins une poche (22, 30) est remplie d'un métal plus mou ou d'un alliage métallique, en particulier de l'étain, un alliage d'étain ou un alliage à base d'étain.

10. Point d'appui de palier selon l'une quelconque des revendications précédentes, **caractérisé en ce que** la au moins une poche (22, 30) est remplie d'une matière plastique résistant à la température.

11. Utilisation d'un coussinet de palier (16, 18), en particulier un coussinet de palier de bielle ou un coussinet de palier principal, ayant une couche de point d'appui métallique (26), en particulier en acier, et une couche de glissement métallique (20) constituée d'un alliage de palier lisse, par un point d'appui de palier ayant les caractéristiques de l'une quelconque des revendications 1 à 10, où la couche de glissement (20) présente au moins une poche (22, 30) dans la zone du coin de lubrification se terminant en pointe (14) entre l'arbre (6) et la couche de glissement (20), qui est remplie d'un matériau (24) plus mou par rapport à l'alliage du palier lisse, et qui sert pour incorporer les particules de saleté ou d'abrasion afin de protéger le point d'appui de palier (2) contre l'usure et le soudage par friction, où la au moins une poche (22, 30), dans la direction circonférentielle (32) du coussinet de palier lisse, présente un segment circonférentiel (31) de 5 à 15°.
